Europäisches Patentamt

European Patent Office

Office européen des brevets

(19)

(11) Veröffentlichungsnummer: **0 065 694**
**A2**

(12) # EUROPÄISCHE PATENTANMELDUNG

(21) Anmeldenummer: **82104050.8**

(22) Anmeldetag: **10.05.82**

(51) Int. Cl.³: **H 02 B 1/06**

(30) Priorität: **25.05.81 DE 8115517 U**

(43) Veröffentlichungstag der Anmeldung:
**01.12.82 Patentblatt 82/48**

(84) Benannte Vertragsstaaten:
**BE NL**

(71) Anmelder: **SIEMENS AKTIENGESELLSCHAFT Berlin
und München
Postfach 22 02 61
D-8000 München 22(DE)**

(72) Erfinder: **Schäfer, Manfred
Tannenweg 12
D-8522 Herzogenaurach(DE)**

(54) **Deckelverschluss von mit abnehmbaren Deckeln versehenen Verteilerkästen.**

(57) Die Erfindung betrifft einen Deckelverschluß, vorzugsweise zum Verschließen von mit abnehmbaren Deckeln (1) versehenen Verteilerkästen zur Verteilung elektrischer Energie.

Der Deckelverschluß besteht aus im Unterteil (2) einrastbaren Gewindebuches (5) zum Einschrauben von im Deckel (1) in Verspannrichtung gehaltenen, in eine Deckelausnehmung (9) einführbaren Bundschrauben (6). In die Deckelausnehmung (9) ist ein pilzförmiges Einsatzteil (20) einführbar, das eine in Durchmesser- und Längsrichtung verlaufende schlitzförmige Aussparung aufweist, die mit Schlitzen (24) in den Seitenwänden (25) der Deckelausnehmung (9) zur Deckung bringbar ist, so daß ein bandförmiger Plombierstreifen (23) durch Schlitz und Aussparung hindurchgeführt und mit der Plombe (7) versehen werden kann.

EP 0 065 694 A2

./...

FIG 1

FIG 2

0065694

SIEMENS AKTIENGESELLSCHAFT
Berlin und München

Unser Zeichen
VPA 81 P 3 0 8 5 E

Deckelverschluß von mit abnehmbaren Deckeln versehenen Verteilerkästen

Die Erfindung bezieht sich auf einen Deckelverschluß, vorzugsweise zum Verschließen von mit abnehmbaren Deckeln versehenen Verteilerkästen zur Verteilung elektrischer Energie, bestehend aus im Unterteil vorzugsweise einrastbaren Hülsen bzw. Gewindehülsen zum Einrasten bzw. Einschrauben von im Deckel in Verspannrichtung gehaltenen, in eine Deckelausnehmung einführbaren Bundriegeln bzw. Bundschrauben.

Bekannte Deckelverschlüsse benutzen in das Unterteil einrastbare Gewindehülsen, in die im Deckel gehaltene Bundschrauben zum Befestigen des Deckels eindrehbar sind. Die Bundschrauben liegen hier in Verspannrichtung an einem Bund im Deckel an. In die oberhalb des Bundes liegende Ausnehmung wird eine Kragenbuchse eingeschoben und eingeklebt, so daß die Bundschraube unverlierbar im Deckel gehalten ist. Eine Plombierung dieses Deckelverschlusses ist nicht vorgesehen. Weiterhin bekannte Deckelverschlüsse (DE-OS 29 25 081) mit Rast- und Schraubverbindung haben eine Plombiermöglichkeit, bei der durch vorgesehene Löcher Plombendrähte eingeführt werden. Diese Anordnung ist nicht geeignet, um Plombenbänder zu benutzen. Der Erfindung liegt somit die Aufgabe zugrunde, eine Deckelverschlußanordnung der obengenannten Art zu schaffen, die mittels bandförmiger Plombierstreifen auf einfache Weise plombierbar ist. Dies wird dadurch erreicht, daß in die Deckelausnehmung ein pilzförmiges Einsatzteil mit in Durchmesser- und Längsrichtung verlaufender, schlitzförmiger Aussparung einführbar ist, die mit Schlitzen in den Seitenwänden der

La 2 Syr / 19.05.1981

Deckelausnehmung zur Deckung bringbar ist. Um das Einfädeln der Plombierstreifen oder -bänder vor Ort vermeiden zu können, ist es vorteilhaft, wenn weitere schlitzförmige, mit Schlitzen und Aussparungen zur Deckung bringbare Aussparungen in einer in die Deckelausnehmung von außen nicht entfernbar einschnappbaren, an sich bekannten Kragenbuchse vorgesehen sind und die Schlitze in den Seitenwänden zur Frontseite des Deckels offen sind. Darüber hinaus kann hierbei durch den Kragen an der Kragenbuchse das Band relativ dicht an der Frontseite des Deckels vorgesehen werden, so daß relativ flache Deckel Verwendung finden können. Um bei dieser Anordnung auch die üblichen Plombierdrähte verwenden zu können, ist es vorteilhaft, wenn Schlitze und Aussparungen durch einen kreisförmigen Mittelteil vergrößert sind.

Anhand der Zeichnung wird ein Ausführungsbeispiel gemäß der Erfindung beschrieben und der Aufbau näher erläutert.

Es zeigen:

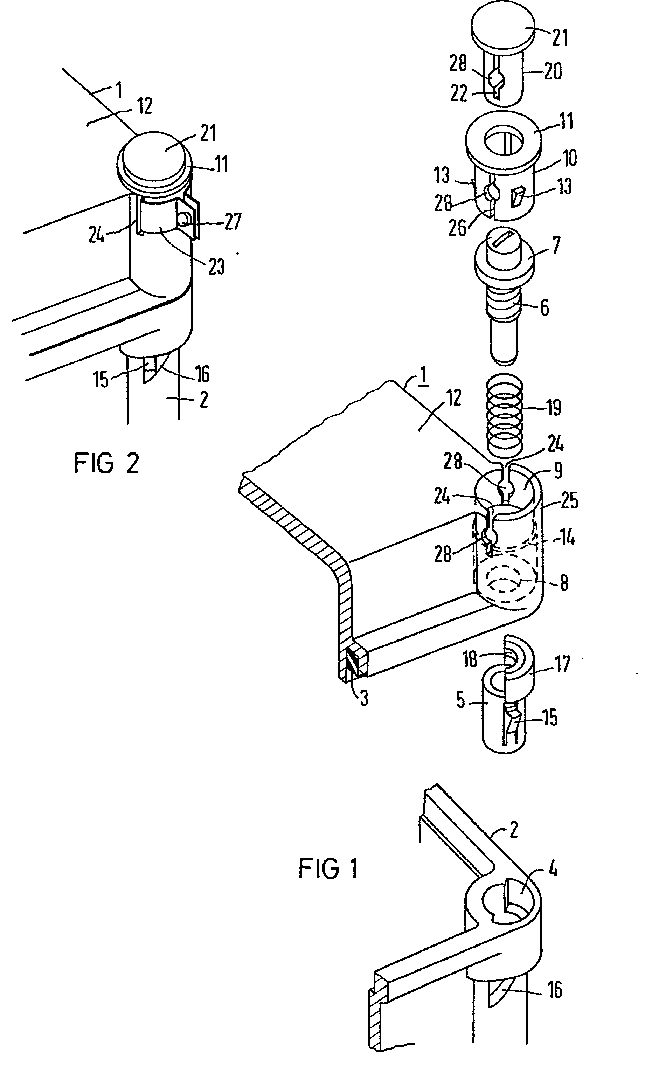

Fig. 1 eine Explosionsdarstellung der zum Verschließen der Verteilerkästen benutzten Einzelteile und
Fig. 2 eine Teilansicht des plombierten Deckels eines Verteilerkastens.

Zum Verschließen des Deckels 1 mit dem Unterteil 2 des Verteilergehäuses, die über eine Dichtung 3 miteinander zusammenfügbar sind, dient die in die Ausnehmung 4 des Unterteils 2 einführbare Gewindebuchse 5 und die Bundschraube 6, die in das Gewinde der Gewindebuchse 5 eindrehbar ist und mit dem Bund 7 am eine Auflagekante bildenden Boden 8 der Ausnehmung 9 anliegt. Eine Kragenbuchse 10, die mit dem Kragen 11 auf der Frontseite 12 des Deckels 1 zur Auflage kommt, dient zur unverlierbaren Halterung der Bundschraube 6 im Deckel 1.

- 3 -    VPA 81 P 3 0 8 5 E

Sie ist über Rastvorsprünge 13 mit Rastausnehmungen 14 in der Ausnehmung 9 von außen nicht entfernbar verrastbar. Die Gewindebuchse 5 ist ebenfalls mit Rastvorsprüngen 15 am Rand des Durchbruches 16 verrastbar. Der Halbkragen 17 der Gewindebuchse 5 ist mit einem Halbgewinde 18 versehen, was jedoch bei dem relativ tiefgängigen Gewinde ohne weiteres ausreicht. Um den Deckel in gewissen Grenzen atmen zu lassen, kann zusätzlich eine Feder 19 auf die Bundschraube 6 aufgeführt werden. In die Kragenbuchse 10 wird ein pilzförmiges Einsatzteil 20 eingeführt; Kappe 21 des Pilzes kommt mit dem Kragen 11 in Berührung; die schlitzförmige Aussparung 22 dient zum Einführen eines bandförmigen Plombierstreifens 23 und fluchtet mit Schlitzen 24 in der Seitenwand 25, die die Ausnehmung 9 begrenzt und mit weiteren Aussparungen 26 in der Kragenbuchse 10. Dies hat den Vorteil, daß nach Einführen des pilzförmigen Einsatzteiles 20 in die Kragenbuchse 10 der bandförmige Plombierstreifen durch die Aussparung 22 hindurchgeführt und mit der Plombe 27 versehen werden kann. Nach Verbinden des Deckels 1 mit dem Unterteil 2 über die Bundschraube 6 kann die aus pilzförmigem Einsatzteil 20, Kragenbuchse 10 und bandförmigem Plombierstreifen 24 mit Plombe 27 bestehende Einheit in die Ausnehmung 9 eingeschoben werden, und nach Verrasten der Rastvorsprünge 13 in den Rastausnehmungen 14 ist die Verbindung zwischen Deckel und Unterteil plombiert. Ein Öffnen des Deckels kann erst nach Lösen der Plombe 27 und Herausziehen des Plombierstreifens und des pilzförmigen Einsatzteiles erfolgen. Ein kreisförmiges Mittelteil 28 in Schlitzen und Aussparungen dient zum wahlweisen Einführen eines Plombierdrahtes. Es ist ersichtlich, daß es sich hier um eine einfache und vielseitige Plombiermöglichkeit handelt, mit der Deckel an Unterteilen verriegelt werden können.

3 Patentansprüche
2 Figuren

Patentansprüche

1. Deckelverschluß, vorzugsweise zum Verschließen von mit abnehmbaren Deckeln versehenen Verteilerkästen zur Verteilung elektrischer Energie, bestehend aus im Unterteil vorzugsweise einrastbaren Hülsen bzw. Gewindehülsen zum Einrasten bzw. Einschrauben von im Deckel in Verspannrichtung gehaltenen, in eine Deckelausnehmung einführbaren Bundriegeln bzw. Bundschrauben, d a d u r c h   g e k e n n z e i c h n e t ,   daß in die Deckelausnehmung (9) ein pilzförmiges Einsatzteil (20) mit in Durchmesser- und Längsrichtung verlaufender, schlitzförmiger Aussparung (22) einführbar ist, die mit Schlitzen (24) in den Seitenwänden (25) der Deckelausnehmung (9) zur Deckung bringbar ist.

2. Verschluß nach Anspruch 1, d a d u r c h   g e k e n n z e i c h n e t ,   daß weitere schlitzförmige, mit Schlitzen (24) und Aussparung (22) zur Deckung bringbare Aussparungen (26) in einer in die Deckelausnehmung (9) von außen nicht entfernbar einschnappbaren, an sich bekannten Kragenbuchse (10) vorgesehen sind und die Schlitze (24) in den Seitenwänden (25) zur Frontseite des Deckels (1) offen sind.

3. Verschluß nach Anspruch 1 oder 2, d a d u r c h   g e k e n n z e i c h n e t ,   daß Schlitze (24) und Aussparungen (22, 26) durch einen kreisförmigen Mittelteil (28) vergrößert sind.

0065694

81 G 3085

FIG 2

FIG 1